# EUROPÄISCHE PATENTSCHRIFT

(11) **EP 3 851 686 B1**
(45) Veröffentlichungstag und Bekanntmachung des Hinweises auf die Patenterteilung: **29.03.2023**
(21) Anmeldenummer: 20152361.0
(22) Anmeldetag: 17.01.2020
(51) Int. Cl.: F16B 37/04

(54) **LEICHTBAUBEFESTIGER**
LIGHTWEIGHT FASTENER
DISPOSITIF DE FIXATION LÉGER

(43) Veröffentlichungstag der Anmeldung: 21.07.2021
(73) Patentinhaber: SFS Group International AG, 9435 Heerbrugg (CH)
(72) Erfinder: Gentner, Philipp, 74189 Weinsberg (DE); Costabel, Sascha, 71131 Jettingen (DE)

(56) Entgegenhaltungen:
- EP-A1- 3 263 918
- EP-A1- 3 301 309
- FR-A1- 2 934 336
- US-B2- 8 177 466

## Beschreibung

Die vorliegende Erfindung befasst sich mit Leichtbaubefestigern, die in der Industrie als Clip oder nach dem englischen Begriff als clip nut bezeichnet werden. Grundsätzlich besteht ein solcher Clip aus einem aus einem klammerförmigen Klippkörper und einer daran beweglich gelagerten Klippmuttter. Die vorliegende Erfindung bezieht sich unter anderem auf einen Leichtbaubefestiger mit einer Klippmutter komplett aus Kunststoff.

### HINTERGRUND

Im Fahrzeugbau wie in der Luftfahrtindustrie werden häufig Leichtbau-Verkleidungen eingesetzt, die lösbar befestigt werden müssen. Um spanende Verarbeitungsschritte bei der Endmontage zu vermeiden, werden solche z.B. plattenförmige Verkleidungselemente vorgebohrt und mit Clips versehen. In deren Verschraubungselemente greifen bei der Endmontage dann die Befestiger zu anderen Verkleidungselementen bzw. strukturell tragenden Elementen ein. Die plattenförmigen Elemente bzw. Bauteile sind hierbei häufig Leichtbauwandelemente bzw. Sandwichpanels, die aus Gewichtsgründen zumeist aus zwei Aussenlagen (aus Kunststoff oder Aluminium) bestehen, welche mit einer wabenförmigen Aussteifung dazwischen verklebt sind.

### STAND DER TECHNIK

Clips sind grundsätzlich aus dem Stand der Technik bekannt. Die US 8,177,466 (US 2008/0310931 A1) zeigt einen zweiteiligen Clip mit einem klammerförmigen, federnden Klippkörper und einer in einer Schnapphalterung gelagerten Klippmutter.

Die US 5,423,646 beschreibt einen Clip mit einem Klippkörper aus Metall, an dessen einem Schenkel eine ein Innengewinde tragende Hülse fest verbaut ist.

Die EP 0 407 282 A1 zeigt einen Clip aus einem Metallbügel mit einer Klemmhalterung, die eine Klippmutter mit einer verbreiterten, dem Innenbereich der Klemme zugewandten Auflagebasis.

Allen drei Clip-Ausführungen ist gemein, dass Vorkehrungen getroffen wurden, um ein Mitdrehen der Mutter während des Eindrehens der Schraube zu verhindern. Die US 5,423,646 mit ihrer fixen Gewindehülse löst dieses Problem durch die rigide Verbindung, bietet aber auch keinen Komfort beim Setzprozess, weil die Mutter kein Spiel hat. Bei den beiden anderen Dokumenten werden die auftretenden Drehmomente bzw. Kräfte über Nasen, Zapfen oder Anschlagflächen von der Klippmutter auf den Klippkörper übertragen und von diesem wiederum in das Bauteil abgeleitet, auf den der Clip aufgesetzt wurde. Diese Drehmomentstützen sind nur beim Eindrehen des Befestigers in die Klippmutter von Belang, für die eigentliche Befestigung der Bauteile zueinander spielen sie keine Rolle. Das Vorsehen von solchen Nasen, Zapfen bzw. Anschlagflächen erhöht sowohl die Komplexität der Klippmutter als auch den Aufwand bei der Montage von Klippmutter und Klippkörper.

### DARSTELLUNG DER ERFINDUNG

Die vorliegende Erfindung hat zum Ziel, die oben genannten Nachteile des Standes der Technik zu verringern und insbesondere einen Clip vorzustellen, der verbesserte Eigenschaften in Bezug auf Montage, Handhabung und Herstellung aufweisen kann.

Diese Aufgabe wird durch eine im Grundsatz zweiteiligen Leichtbaubefestiger aus Klippkörper und Klippmutter gelöst mit den Merkmalen des unabhängigen Anspruchs 1. Die Unteransprüche beschreiben weitere Varianten und Ausführungsbeispiele.

Ein erfindungsgemässer Leichtbaubefestiger umfasst einen einstückigen Klippkörper aus Kunststoff und eine Klippmutter. Wie im Stand der Technik weist der Klippkörper die Grundform einer Klemme auf, mit zwei sich gegenüberliegenden, sich in Längsrichtung erstreckenden Schenkeln und einem, zwei gegenüberliegende Schenkel-Enden verbindenden Steg. Die beiden zugewandten Flächen der Schenkel und der Steg beschreiben bzw. begrenzen somit einen Aufnahmeraum für ein plattenförmiges Bauteil.

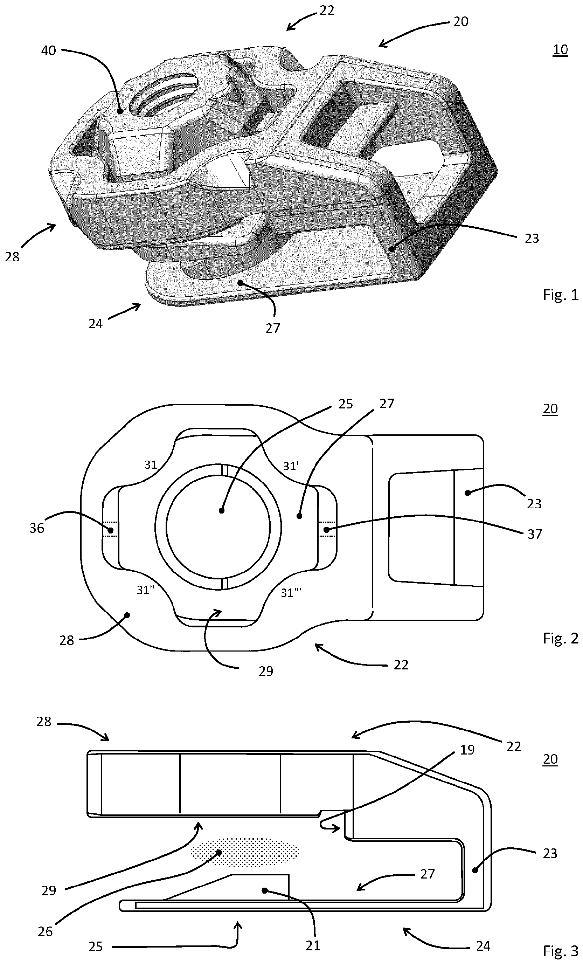

Der Begriff Aufnahmeraum soll dabei als das Volumen verstanden werden, der von den Grenzflächen der beiden Schenkel und dem Steg beschrieben wird. Der Begriff "Innenseite" bzw. "Innenbereich" beim Klippkörper bzw. Leichtbaubefestiger bezieht sich ebenfalls auf diesen Innenbereich zwischen den beiden Schenkeln des Klippkörpers. Die Begriffe "oben" und "unten" beziehen sich auf die übliche Darstellung eines Clips ähnlich der Darstellung in Figur 1.

Die Klippmutter wiederum weist eine Mutternbasis auf, die im Wesentlichen plattenförmig ausgestaltet ist mit einer flachen, zur Klemmeninnenseite weisenden, ebenen Basisfläche. Auf der Mutternbasis (genauer: auf der der Basisfläche entgegengesetzten (Ober-)Seite) baut ein Hauptkörper auf mit einer Deckfläche sowie eine Mehrzahl an Seitenwänden, die sich zwischen Mutternbasis und Deckfläche erstrecken.

Somit ähnelt, vereinfacht gesagt, die Mutternbasis einem unregelmässig ausgestalteten Flansch, der den Hauptkörper an seinem unteren Ende abschliesst.

Der Hauptkörper hat einen im Wesentlichen polygonen Querschnitt parallel zur Mutternbasis. In üblicher Betrachtungsweise weist also der Horizontalquerschnitt eine irreguläre Form auf, bevorzugt als Vieleck. Seiner Funktion als Klippmutter folgend, hat der Hauptkörper eine zentrale Mittenöffnung, die sich durch die Mutternbasis, den Hauptkörper und die Deckfläche erstreckt (vertikale Durchgangsöffnung).

Der erste Schenkel des Klippkörpers trägt einen Käfig aus mehreren Wandelementen, in dem die Klippmutter schwimmend beweglich gelagert ist. Mit Käfig ist die bei Clips übliche Aufnahme bzw. bewegliche Lagerung der Klippmutter gemeint. Der Käfig hält die Klippmutter mit Spiel. Dieser Käfig weist hierzu mindestens zwei Halteöffnungen auf.

Der zweite Schenkel des Klippkörpers ist zur Klemmen-Innenseite als zungenförmige, flache Anlagefläche ausgestaltet. Mit Anlagefläche ist damit die Kontaktfläche mit einem Bauteil gemeint, auf das der Leichtbaubefestiger aufgeschoben wird.

Beide Schenkel, und zwar der erste Schenkel im Bereich des Käfigs und der zweite Schenkel im Bereich der Zunge, weisen jeweils eine Öffnung auf, die mit der zentralen Mittenöffnung der im Käfig angeordneten Klippmutter fluchten.

Weiterhin ist der erste Schenkel so ausgestaltet, dass die Basisfläche der Klippmutter zur Innenseite der Klemme weist und als Anlagefläche ausgebildet ist für den direkten Kontakt mit dem plattenförmigen Bauteil. In den meisten Ausführungen des Standes der Technik wird die Klippmutter als Bauteil auf der Oberseite eines Schenkels gehaltert und presst damit, im verbauten Zustand, auf den Schenkel. Dieser wirkt also als Unterlagscheibe für die Klippmutter. Bei der vorliegenden Erfindung ist der erste Schenkel so ausgeführt, dass die Mutternbasis Teil der Innenseite des ersten Schenkels bildet. Idealerweise wird die restliche Innenfläche des Schenkels so ausgeführt, dass sie flächig mit der Basisfläche der Mutternbasis fluchtet. Sie kann alternativ auch geringfügig flächig versetzt sein, damit in jedem Anwendungsfall die Basisfläche der Mutternbasis am Bauteil anliegen kann.

Ferner weist der Hauptkörper der Klippmutter mindestens zwei zapfenförmige Nasen auf, die in die entsprechenden Öffnungen der Wandelemente des Käfigs eingreifen. Bevorzugt werden diese Nasen an gegenüberliegenden Seiten des Hauptkörpers angeordnet und sind so dimensioniert, dass sie in den zugehörigen Öffnungen Spiel haben. Die Nasen haben im Zusammenspiel mit den Öffnungen des Käfigs die Hauptfunktion einer Verliersicherung und weniger die einer Drehmomentstütze. Diese Kraftübertragung bzw. Drehmomentübertragung beim Eindrehen eines Befestigers in die zentrale Mittenöffnung erfolgt vorrangig durch die Seitenwände des Hauptkörpers auf die Wandelemente des Käfigs.

Bevorzugt ist eine Anzahl von n Seitenwänden des Klippmutter-Hauptkörpers konkav gewölbt, wobei gilt n=>3. Da die Form des Horizontalquerschnitts des Hauptkörpers als Polygon beschrieben wurde, könnte also ein Sechseck mit z.B. 3 oder 4 konkav (nach innen) gewölbten Seiten diese Bedingung erfüllen. Ebenso ein Oktagon mit z.B. 4 oder 6 konkaven Seiten. Ausdrücklich kann vorgesehen sein, dass zwischen konkaven (Seiten-)Wandflächen auch weitere gerade oder konvexe Seitenwände vorgesehen sein können. Diese Wandflächen können stetig ineinander übergehen oder durch Kanten getrennt sein. Entscheidend ist das Zusammenspiel mit den Wandelementen des Käfigs.

Ein Leichtbaubefestiger gemäss Erfindung kann daher mindestens n nach innen gerichtete Wandelemente des Käfigs aufweisen, die konvex nach innen gewölbt sind. "Nach innen" ist dabei als "dem von den Wandelementen umschriebenen Bereich zugewandt" zu verstehen. In bevorzugter Ausführung stehen die Seitenwände des Klippmutter-Hauptkörpers und die Wandelemente des Käfigs sich paarweise gegenüber. In weiter bevorzugten Ausführungsformen wird die Wölbung der Seitenwände bzw. Wandelemente der Form von Kegelschnitten folgen, also im Horizontalquerschnitt (parallel zur Basisfläche) als kreisabschnittsförmig, elliptisch, parabolisch oder hyperbolisch beschreibbar sind. Konstruktiv bevorzugt wird hierbei die Wölbung als Kreisbogen ausgeführt. In einer konstruktiv und herstelltechnisch bevorzugten Ausführung werden somit die Wölbungen dieselbe geometrische Grundform nutzen. Noch weiter bevorzugt können die Radien der Kreisbögen für die konkaven Seitenwände bzw. konvexen Wandelemente im Wesentlichen gleich gross gewählt werden.

Betrachtet man die vorbeschriebenen Merkmale zusammen, so ist die Aussenform der Klippmutter-Seitenwände komplementär zu den Wandelementen des Käfigs, Aussenwölbung trifft auf Innenwölbung. Wird also ein Befestiger mit der Klippmutter verbunden, wird anfänglich sicher die Klippmutter vom Befestiger bis zu einem gewissen Grad mitgedreht, bis die Drehbewegung gehindert wird. Die schwimmende Lagerung der Klippmutter im Käfig stellt ja diesen Freiheitsgrad geplant zur Verfügung. Im Stand der Technik mit Nasen und Vorsprüngen als Drehmomentstützen dienen diese der Kraftableitung. Bei der vorliegenden Erfindung wird dies durch den Kontakt der Seitenwände / Wandelemente erreicht. Dabei wird sich der Kontakt je nach Ausrichtung bzw. Orientierung von Befestiger, Klippmutter und Käfig selbstständig einstellen. Die Kontaktfläche könnte demnach über eine oder mehrere Flächen gleichzeitig erfolgen. Durch die wesentlich grösseren Kontakt-Flächen im Vergleich zu den Stegen oder Nasen im Stand der Technik wird eine schonendere Kraftableitung erreicht, was ein optimiertes Design des gesamten Leichtbaubefestigers erlaubt.

Die zentrale Mittenöffnung der Klippmutter wird in bevorzugter Ausführung mit einem Innengewinde ausgestattet. Alternativ und äquivalent zu einem Schraubgewinde können auch andere Befestigungsarten vorgesehen werden, z.B. Bajonettverschlüsse, Schnapphalterungen, Dreh-Klemmverschlüsse.

Es hat sich gezeigt, dass die Klippmutter einteilig aus Kunststoff, bevorzugt einem Thermoplast, insbesondere PEEK, gefertigt werden kann. Zuschläge wie Glasfasern, Kohlefasern oder andere vor allem spritzgiessfähige Zuschlagstoffe können verwendet werden, um die Festigkeit der Klippmutter wie gewünscht bzw. gefordert, einzustellen.

In einer besonderen Ausführungsform kann der der Deckfläche zugewandte Auslauf des Gewindes so ausgelegt werden, dass ein eingeschraubter Befestiger klemmend gesichert wird. Dabei kann auf die im Stand der Technik bekannten Methoden zurückgegriffen werden, indem beispielsweise die Gewindegrate leicht verbreitert werden, die Gewindesteigung verändert wird oder das Gewinde nicht vollständig ausgeformt wird. Alternativ oder ergänzend wäre auch denkbar, den Gewindeauslauf mit aufgetragenen Beschichtungen, Klebern oder anderen Materiallagen zu versehen, um den Widerstand im Gewinde-Endbereich zu erhöhen und die Schraubverbindung somit zu sichern. Es hat sich gezeigt, dass die Ausführung des Gewindes in Kunststoff bei Wahl der entsprechenden Festigkeit problemlos möglich ist.

In einer weiteren Ausführungsform kann die Mutternbasis so ausgelegt werden, dass sie auf ihrer der Basisfläche abgewandte Oberseite Auflagebereiche aufweist, die eine konkave Wölbung haben und so ausgerichtet sind, dass sie eine Abrollbewegung bzw. Verkippung der Klippmutter entlang des ersten Schenkels erlauben. Wie bereits erwähnt, dienen die Nasen am Hauptkörper, die in den zugehörigen Öffnungen des Käfigs gelagert sind, vorrangig der Verliersicherung. Die gewölbte Oberseite der Mutternbasis bzw. die Auflageflächen dieser Oberseite sind durch die Flansch-ähnliche Auskragung des Hauptkörpers der Unterseite des Käfigs bzw. des ersten Schenkels zugewandt. Wie oben erwähnt, bildet die Basisfläche ja eine direkte Auflagefläche für das zu sichernde Bauteil, daher liegt konsequenterweise der Käfig auf der gewölbte Oberseite der Mutternbasis bzw. den Auflageflächen dieser Oberseite auf. Durch die gewählte Form (halbrunde Wölbung) entsteht eine zusätzliche Kippbeweglichkeit zwischen dem ersten Schenkel / Käfigunterseite und der Klippmutter.

Ferner kann an der Mutternbasis eine zur Basisfläche angeschrägte Fase vorgesehen werden. Diese wird bevorzugt auf der dem Steg abgewandten Seite der Klippmutter angebracht und unterstützt bzw. erleichtert das Aufschieben des Leichtbaubefestigers auf das Bauteil.

Weiterhin kann vorgesehen werden, dass die Mutternbasis an der, der Fase entgegengesetzten Kante eine Anschlagkante aufweist. Wenn die Klippmutter im Käfig gelagert ist (mit anderen Worten: korrekt verbaut) entsteht so eine Notanlagefläche parallel beabstandet zur einer Gegenfläche am Klippkörper gegenüber.

Analog zur Klippmutter kann der Klippkörper einstückig aus Kunststoff, bevorzugt einem Thermoplast, insbesondere PEEK, gefertigt werden. Seiner Bestimmung als Klammer folgend kann der Klippkörper bevorzugt als 2-Komponenten-Spritzguss einstückig ausgeführt werden, wobei die erste Kunststoffkomponente elastischer gewählt wird als die zweite. Die Einstellung der Festigkeit bzw. Elastizität der Kunststoffkomponenten kann in bekannter Weise durch Zuschlagstoffe wie Glas- oder Kohlefasern realisiert werden.

Bevorzugt wird die elastischere Komponente überwiegend im Bereich der zweiten Schenkels bzw. der Zunge und im Bereich des Steges zum Einsatz kommen. Damit lässt sich das Aufschieben auf das Bauteil einfacher realisieren, weil Zunge und Steg elastisch nachgebend den Montageprozess unterstützen. Dagegen kann der Käfig beispielsweise in einer Ausführung mit glasgefülltem PEEK eine rigidere Struktur erhalten.

### BESCHREIBUNG DER FIGUREN

Die Erfindung wird nun mit Bezug auf die begleitenden Zeichnungen anhand besonders bevorzugter Ausführungsformen beispielhaft erläutert.
Figur 1 zeigt eine perspektivische Sicht auf einen erfindungsgemäßen Leichtbaubefestiger.
Figur 2 zeigt einen Klippkörper ohne Klippmutter schematisch von oben.
Figur 3 zeigt einen Klippkörper ohne Klippmutter schematisch von der Seite.
Figur 4 zeigt eine perspektivische Sicht auf eine Klippmutter
Figur 5 zeigt eine Seitenansicht einer Klippmutter
Figur 6 zeigt die Ansicht einer Klippmutter von oben.

Figur 1 zeigt einen Leichtbaubefestiger 10 von schräg oben in einer 3D-Ansicht. Die beiden Hauptbestandteile sind die Klippmutter 40 verbaut im Käfig 28, der den überwiegenden Teil des ersten Schenkels 22 des Klippkörpers 20 bildet. Der erste Schenkel 22 ist über einen Steg 23 mit dem zweiten Schenkel 24 verbunden, der als Zunge 27 funktionell ausgebildet und bezeichnet wird. Die Bezeichnungen erster Schenkel 22, zweiter Schenkel 24 und verbindender Steg 23 sind vorwiegend funktionell gemeint. Da der Klippkörper 20 einteilig konstruiert ist und diese funktionellen Bereiche ineinander übergehen, ist dem Fachmann klar, dass exakte Abgrenzungslinien weder sinnvoll noch notwendig sind.

Figur 1 zeigt weitere Details, die bei einem Serienprodukt aus konstruktiver Sicht vorgesehen werden können, wie Aussparungen zur Materialersparnis, Verstärkungsrippen und Griffflächen.

In Figur 2 ist eine Draufsicht "von oben" auf den Klippkörper 20 des Leichtbaubefestigers 10, sprich auf den ersten Schenkel 22. Man erkennt die Struktur des Käfigs 28 von oben. Die Wandelemente 31, 31',...31‴ sind als konvex nach innen, in den Innenbereich des Käfigs gewölbte Flächen erkennbar. Der Käfig hat eine grosse Öffnung 29 durch den ersten Schenkel 22, die den Blick auf Teile des zweiten Schenkels 24 bzw. die Zunge 27 erlauben. Die Zunge 27 weist eine weitere Öffnung 25 auf. Der Steg 23 ist in Draufsicht gezeigt. Zwei Bereiche des Käfigs 28 weisen die Öffnungen 36 und 37 im Käfig 28 auf, sie sind einander gegenüberliegend in der Längsachse des ersten Schenkels 22 gestrichelt angedeutet. Diese Öffnungen sind parallel zur Erstreckungsebene des ersten Schenkels 22 angeordnet.

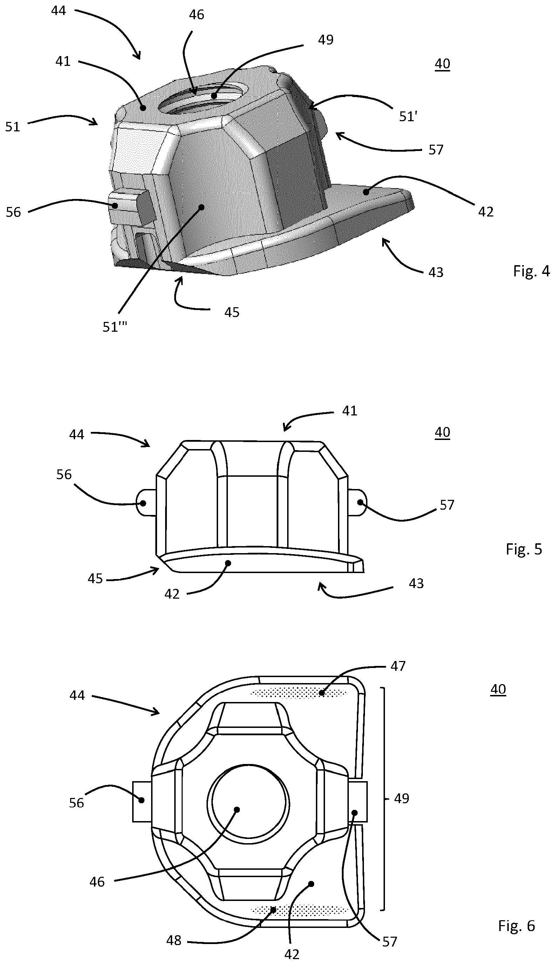

Die Figur 3 zeigt eine Seitenansicht des Klippkörpers 20, erneut mit erstem Schenkel 22, zweitem Schenkel 24 und verbindendem Steg 23. Der Käfig 28 nimmt den überwiegenden Teil des ersten Schenkels 22 ein. Zwischen Käfig 28 und dem Übergangsbereich zum Steg 23 ist der Schenkel mit einer zur Innenseite der Klemme orientierten Stufe ausgestattet, die eine Notanlagefläche 19 bereitstellt. Figur 1 zeigt das Zusammenspiel von Notanlagefläche 19 und der Anschlagkante 49 (cf. auch Figur 6). Die Öffnung 25 im zweiten Schenkel 24 und die Lage der Öffnung 29 (erster Schenkel 22) sind durch Pfeile angedeutet. Die Öffnung 25 im Bereich der Zunge 27 ist von einem angeschnittenen Hülsenabschnitt 21, ähnlich einem Kragen umgeben.

Dieser dient dazu, den Leichtbaubefestiger auf der Öffnung in dem (hier nicht gezeigten) Bauteil zu zentrieren. Die Abschrägung zur Einführöffnung in den Aufnahmeraum 26 erleichtert das Aufschieben des Leichtbaubefestigers auf das Bauteil.

Figur 4 zeigt in perspektivischer Ansicht eine Klippmutter 40 als vereinzelte Komponente. Deren Hauptbestandteile sind die Mutternbasis 42 und der Hauptkörper 44. Die Mutternbasis 42 ist als eine im Wesentlichen ebene, plattenförmige Basisfläche 43 mit irregulär geformten Kanten gezeigt. Die ebene Basisfläche 43 (Unterseite) geht an einer Kante über in die vorbeschriebene Fase 45. Der Hauptkörper 44 ist gezeigt als ein im Grundsatz polygoner Körper, dessen Seitenwände 51, 51', 51",... konkav sind, unterbrochen von ebenen Wandabschnitten. Die Seitenwände gehen teilweise in Schrägen über, die wiederum in die Deckfläche 41 münden. In der Deckfläche ist die zentrale Mittenöffnung 46 gezeigt mit ihrem Innengewinde 49. Am Hauptkörper sind zwei Vorsprünge bzw. Nasen 56, 57 angebracht, die als Verliersicherung dienen (nach Montage im Klippkörper). Sie kommen im montierten Zustand in den Öffnungen 36, 37 zu liegen.

Figur 5 zeigt eine Klippmutter 40 in schematischer Seitenansicht. Hier wird erkennbar, dass die Mutternbasis 42 über eine ebene Basisfläche 43 ("Unterseite") verfügt, während deren Oberseite eine konvexe Wölbung besitzt.

Figur 6 wiederum ist eine Draufsicht auf die Klippmutter von der Deckfläche 41 her. Die hier irregulär gewählte Form der Mutternbasis 42 ist erkennbar. Wie man in Zusammenschau von Figur 1 und 6 erkennt, gibt es Kontaktbereiche zwischen der Mutternbasis und der dem Aufnahmeraum 26 zugewandten Unterseite des ersten Schenkels 22 des Klippkörpers 20. Diese Auflagebereiche 47 und 48 sind in Figur 6 schraffiert angedeutet. Auf ihnen kann, wie ebenfalls weiter oben beschrieben, wegen der konvex gewölbten Oberfläche der Mutternbasis 42 die Klippmutter 40 relativ zum Klippkörper eine abrollende Bewegung ausführen. Merkmal 49 bezeichnet die Anschlagkante, die (im assemblierten Zustand) mit der Notanlagefläche 19 wechselwirken kann.

Die in den Figuren 1-6 gezeigte Ausführungsform ist eine bevorzugte Realisierungsform für die beschriebene Erfindung.

## Patentansprüche

1. Leichtbaubefestiger (10) mit einem einstückigen Klippkörper (20) aus Kunststoff
- wobei der Klippkörper (20) die Grundform einer Klemme aufweist
- mit zwei sich gegenüberliegenden, sich in Längsrichtung erstreckenden Schenkeln (22, 24)
- und einem, zwei gegenüberliegende Schenkel-Enden verbindenden Steg (23);
- mit einem Aufnahmeraum (26) für ein plattenförmiges Bauteil zwischen den Schenkeln (22, 24) der an einer Seite durch den Steg (23) begrenzt wird;
und einer Klippmutter (40)
- welche eine Mutternbasis (42) aufweist, die im Wesentlichen plattenförmig ausgestaltet ist mit einer flachen, zur Klemmeninnenseite weisenden ebenen Basisfläche (43);
- und einem Hauptkörper (44), der auf der Mutternbasis aufbaut (42) und eine Deckfläche (41) sowie eine Mehrzahl an Seitenwänden (51, 51', 52",...) aufweist, die sich zwischen Mutternbasis (42) und Deckfläche (41) erstrecken;
- wobei der Hauptkörper (44) einen im Wesentlichen polygonen Querschnitt parallel zur Mutternbasis (42) aufweist;
- und die eine zentrale Mittenöffnung (46) hat, die sich durch die Mutternbasis (42), den Hauptkörper (44) und die Deckfläche (41) erstreckt;
wobei
- ein erster Schenkel (22) des Klippkörpers (20) einen Käfig (28) aus mehreren Wandelementen (31, 31', 31", ...) aufweist, in dem die Klippmutter (40) schwimmend beweglich gelagert ist;
- der Käfig (28) mindestens zwei Halteöffnungen (36, 37) aufweist
- der zweite Schenkel (24) zur Klemmen-Innenseite als zungenförmige, flache Anlagefläche (27) ausgestaltet ist
- der erste Schenkel im Bereich des Käfigs (28), der zweite Schenkel im Bereich der zungenförmigen, flachen Anlagefläche (27) jeweils eine Öffnung (29, 25) aufweisen, die mit der zentralen Mittenöffnung (46) der im Käfig (28) angeordneten Klippmutter (40) fluchten
**dadurch gekennzeichnet, dass**
- der erste Schenkel (22) so ausgestaltet ist, dass die Basisfläche (43) der Klippmutter (40) zur Innenseite der Klemme weist und als Anlagefläche ausgebildet ist für den direkten Kontakt mit dem plattenförmigen Bauteil;
- der Hauptkörper (44) der Klippmutter (40) mindestens zwei zapfenförmige Nasen (56, 57) aufweist, die in die Öffnungen (36, 37) der Wandelemente des Käfigs (28) eingreifen.

2. Leichtbaubefestiger gemäss Anspruch 1, **dadurch gekennzeichnet, dass** eine Anzahl von n Seitenwänden (51, 51', 51",...) des Klippmutter-Hauptkörpers (44) konkav gewölbt sind, wobei gilt n=>3.

3. Leichtbaubefestiger nach Anspruch 1-2, **dadurch gekennzeichnet, dass** mindestens n nach innen gerichtete Wandelemente (31, 31', 31",...) des Käfigs (28) konvex nach innen gewölbt sind.

4. Leichtbaubefestiger nach Anspruch 1-3, **dadurch gekennzeichnet, dass** die Seitenwände (51, 51', 51",...) des Klippmutter-Hauptkörpers (44) und die Wandelemente (31, 31', 31",...) des Käfigs (28) sich paarweise gegenüber stehen.

5. Leichtbaubefestiger nach Anspruch 2-4, **dadurch gekennzeichnet, dass** die Wölbung der Seitenwände (51, 51', 51",...) bzw. Wandelemente (31, 31', 31",...) der Form von Kegelschnitten folgen, also im Horizontalquerschnitt als kreisabschnittsförmig, elliptisch, parabolisch oder hyperbolisch beschreibbar sind.

6. Leichtbaubefestiger nach Anspruch 2-5, **dadurch gekennzeichnet, dass** die Wölbung der Seitenwände (51, 51', 51",...) bzw. Wandelemente (31, 31', 31",...) als Kreisbögen ausgeführt ist.

7. Leichtbaubefestiger nach Anspruch 6, **dadurch gekennzeichnet, dass** die Radien der Kreisbögen für die konkaven Seitenwände (51, 51', 51",...) bzw. konvexen Wandelemente (31, 31', 31",...) im Wesentlichen gleich gross gewählt werden.

8. Leichtbaubefestiger nach Anspruch 1-7, **dadurch gekennzeichnet, dass** die zentrale Mittenöffnung (46) der Klippmutter (40) ein Innengewinde (49) aufweist.

9. Leichtbaubefestiger nach Anspruch 1-8, **dadurch gekennzeichnet, dass** die Klippmutter (20) einteilig aus Kunststoff, bevorzugt einem Thermoplast, insbesondere PEEK, gefertigt ist.

10. Leichtbaubefestiger nach Anspruch 8-9, **dadurch gekennzeichnet, dass** der der Deckfläche (41) zugewandte Auslauf des Gewindes (49) so ausgelegt ist, dass ein eingeschraubter Befestiger klemmend gesichert wird.

11. Leichtbaubefestiger nach Anspruch 1-10, **dadurch gekennzeichnet, dass** die Mutternbasis (42) auf ihrer der Basisfläche (43) abgewandte Oberseite Auflagebereiche (47, 48) aufweist, die eine konkave Wölbung haben und so ausgerichtet sind, dass sie eine Abrollbewegung bzw. Verkippung der Klippmutter (40) entlang des ersten Schenkels (22) erlauben.

12. Leichtbaubefestiger nach Anspruch 1-11, **dadurch gekennzeichnet, dass** die Mutternbasis (42) eine zur Basisfläche angeschrägte Fase (45) aufweist.

13. Leichtbaubefestiger nach Anspruch 12,
**dadurch gekennzeichnet, dass** die Mutternbasis (42) an der, der Fase (45) entgegengesetzten Kante eine Anschlagkante (49) aufweist, welche, wenn die Klippmutter (40) im Käfig (48) gelagert ist, einer Notanlagefläche (19) parallel beabstandet gegenüber angeordnet ist.

14. Leichtbaubefestiger nach Anspruch 1-13, **dadurch gekennzeichnet, dass** der Klippkörper einstückig aus Kunststoff, bevorzugt einem Thermoplast, insbesondere PEEK, gefertigt ist.

15. Leichtbaubefestiger nach Anspruch 1-14, **dadurch gekennzeichnet, dass** der Klippkörper als 2-Komponenten-Spritzguss einstückig ausgeführt wird, wobei die erste Kunststoffkomponente elastischer gewählt wird als die zweite.

16. Leichtbaubefestiger nach Anspruch 15, **dadurch gekennzeichnet, dass** die elastischere Komponente überwiegend im Bereich der zweiten Schenkels (22) bzw. der Zunge (27) und im Bereich des Steges (23) zum Einsatz kommt.

## Claims

1. Lightweight fastener (10) having an integral clip body (20) made of plastic,
- wherein the clip body (20) has the basic shape of a clamp
- having two opposite, longitudinally extending legs (22, 24)
- and a web (23) connecting two opposite leg ends;
- having a receiving space (26) for a plate-shaped component between the legs (22, 24), which is bounded on one side by the web (23);
and a clip nut (40)
- which has a nut base (42) that is substantially plate-shaped with a flat base surface (43) facing the inside of the clamp;
- and a main body (44) supported on the nut base (42) and a top surface (41) and a plurality of side walls (51, 51', 52",...) extending between the nut base (42) and the top surface (41);
- wherein the main body (44) has a substantially polygonal cross-section parallel to the nut base (42);
- and a central center opening (46) extending through the nut base (42), the main body (44) and the top surface (41);
wherein
- a first leg (22) of the clip body (20) comprises a cage (28) of a plurality of wall elements (31, 31', 31", ...) in which the clip nut (40) is floatingly movably mounted;
- the cage (28) has at least two retaining openings (36, 37)
- the second leg (24) is designed as a tongue-shaped, flat contact surface (27) towards the inside of the clamp
- the first leg in the region of the cage (28), the second leg in the region of the tongue-shaped, flat contact surface (27) each have an opening (29, 25) which is aligned with the central center opening (46) of the clip nut (40) arranged in the cage (28),
**characterized in that**
- the first leg (22) is designed such that the base surface (43) of the clip nut (40) faces the inside of the clamp and is designed as a contact surface for direct contact with the plate-shaped component;
- the main body (44) of the clip nut (40) has at least two peg-shaped lugs (56, 57) which engage in the openings (36, 37) of the wall elements of the cage (28).

2. Lightweight fastener according to claim 1, **characterized in that** a number of n side walls (51, 51', 51",...) of the clip nut main body (44) are concavely curved, wherein n=>3 applies.

3. Lightweight fastener according to claim 1-2, **characterized in that** at least n inwardly directed wall elements (31, 31', 31",...) of the cage (28) are convexly inwardly curved.

4. Lightweight fastener according to claim 1-3, **characterized in that** the side walls (51, 51', 51",...) of the clip nut main body (44) and the wall elements (31, 31', 31",...) of the cage (28) face each other in pairs.

5. Lightweight fastener according to claim 2-4, **characterized in that** the curvature of the side walls (51, 51', 51",...) or wall elements (31, 31', 31",...) follow the shape of conical sections, i.e. can be described in horizontal cross-section as circular sectional, elliptical, parabolic or hyperbolic.

6. Lightweight fastener according to claim 2-5, **characterized in that** the curvature of the side walls (51, 51', 51",...) or wall elements (31, 31', 31",...) is designed as circular arcs.

7. Lightweight fastener according to claim 6, **characterized in that** the radii of the circular arcs for the concave side walls (51, 51', 51",...) or convex wall elements (31, 31', 31",...) are selected to be substantially equal in size.

8. Lightweight fastener according to claim 1-7, **characterized in that** the central center opening (46) of the clip nut (40) has an internal thread (49).

9. Lightweight fastener according to claim 1-8, **characterized in that** the clip nut (20) is integrally made from plastic, preferably a thermoplastic, in particular PEEK.

10. Lightweight fastener according to claim 8-9, **characterized in that** the outlet of the thread (49) facing the top surface (41) is designed to clamp a screwed-in fastener.

11. Lightweight fastener according to claim 1-10, **characterized in that** the nut base (42) includes, on its upper surface opposite the base surface (43), support portions (47, 48) having a concave curvature and oriented to permit rolling movement or tilting of the clip nut (40) along the first leg (22).

12. Lightweight fastener according to claim 1-11, **characterized in that** the nut base (42) has a chamfer (45) that is beveled toward the base surface.

13. Lightweight fastener according to claim 12, **characterized in that** the nut base (42) has, on the edge opposite the chamfer (45), a stop edge (49) which, when the clip nut (40) is mounted in the cage (48), is arranged opposite an emergency contact surface (19) at a parallel distance.

14. Lightweight fastener according to claim 1-13, **characterized in that** the clip body is integrally made from plastic, preferably a thermoplastic, in particular PEEK.

15. Lightweight fastener according to claim 1-14, **characterized in that** the clip body is integrally made as a 2-component injection molding, wherein the first plastic component is selected to be more elastic than the second.

16. Lightweight fastener according to claim 15, **characterized in that** the more elastic component is used predominantly in the region of the second leg (22) or the tongue (27) and in the region of the web (23).

## Revendications

1. Élément de fixation de construction légère (10) avec un corps de clip (20) d'une seule pièce en matière plastique
- le corps de clip (20) présentant la forme de base d'une pince
- avec deux branches (22, 24) opposées, s'étendant dans la direction longitudinale
- et une entretoise (23) reliant deux extrémités de branche opposées ;
- avec un espace de réception (26) pour un composant en forme de plaque entre les branches (22, 24), qui est délimité d'un côté par l'entretoise (23) ;
et un écrou de clip (40)
- qui présente une base d'écrou (42) qui est conçue sensiblement en forme de plaque avec une surface de base plate (43) dirigée vers le côté intérieur de la pince ;
- et un corps principal (44) qui repose sur la base d'écrou (42) et qui présente une surface supérieure (41) ainsi qu'une pluralité de parois latérales (51, 51', 52",...) qui s'étendent entre la base d'écrou (42) et la surface supérieure (41) ;
- le corps principal (44) présentant une section transversale sensiblement polygonale parallèle à la base d'écrou (42) ;
- et qui présente une ouverture centrale (46) qui s'étend à travers la base d'écrou (42), le corps principal (44) et la surface supérieure (41) ;
dans lequel
- une première branche (22) du corps de clip (20) présente une cage (28) constituée de plusieurs éléments de paroi (31, 31', 31",...), dans laquelle l'écrou de clip (40) est logé de manière mobile et flottante ;
- la cage (28) présente au moins deux ouvertures de retenue (36, 37),
- la deuxième branche (24) est conçue comme une surface d'appui plate en forme de languette (27) vers le côté intérieur de la pince,
- la première branche dans la zone de la cage (28), la deuxième branche dans la zone de la surface d'appui plate en forme de languette (27) présentent chacune une ouverture (29, 25), qui sont alignées avec l'ouverture centrale (46) de l'écrou de clip (40) disposé dans la cage (28),
**caractérisé en ce que**
- la première branche (22) est conçue de telle sorte que la surface de base (43) de l'écrou de clip (40) est dirigée vers le côté intérieur de la pince et est conçue comme surface d'appui pour le contact direct avec le composant en forme de plaque ;
- le corps principal (44) de l'écrou de clip (40) présente au moins deux ergots (56, 57) en forme de tenon qui s'engagent dans les ouvertures (36, 37) des éléments de paroi de la cage (28).

2. Élément de fixation de construction légère selon la revendication 1, **caractérisé en ce qu'**un nombre n de parois latérales (51, 51', 51",...) du corps principal d'écrou de clip (44) sont courbées de manière concave, avec n=>3.

3. Élément de fixation de construction légère selon les revendications 1 à 2, **caractérisé en ce qu'**au moins n éléments de paroi (31, 31', 31",...) de la cage (28) orientés vers l'intérieur sont courbés de manière convexe vers l'intérieur.

4. Élément de fixation de construction légère selon les revendications 1 à 3, **caractérisé en ce que** les parois latérales (51, 51', 51",...) du corps principal d'écrou de clip (44) et les éléments de paroi (31, 31', 31",...) de la cage (28) sont opposés par paires.

5. Élément de fixation de construction légère selon les revendications 2 à 4, **caractérisé en ce que** la courbure des parois latérales (51, 51', 51",...), respectivement des éléments de paroi (31, 31', 31",...), suit la forme de sections coniques, et peut donc être décrite comme étant en forme de segment de cercle, elliptique, parabolique ou hyperbolique en section transversale horizontale.

6. Élément de fixation de construction légère selon les revendications 2 à 5, **caractérisé en ce que** la courbure des parois latérales (51, 51', 51",...), respectivement des éléments de paroi (31, 31', 31",...), est réalisée sous la forme d'arcs de cercle.

7. Élément de fixation de construction légère selon la revendication 6, **caractérisé en ce que** les rayons des arcs de cercle pour les parois latérales concaves (51, 51', 51",...), respectivement les éléments de paroi convexes (31, 31', 31",...), sont choisis sensiblement égaux.

8. Élément de fixation de construction légère selon les revendications 1 à 7, **caractérisé en ce que** l'ouverture centrale (46) de l'écrou de clip (40) présente un filetage intérieur (49).

9. Élément de fixation de construction légère selon les revendications 1 à 8, **caractérisé en ce que** l'écrou de clip (20) est fabriqué d'une seule pièce en matière plastique, de préférence en une matière thermoplastique, en particulier en PEEK.

10. Élément de fixation de construction légère selon les revendications 8 à 9, **caractérisé en ce que** la sortie du filetage (49) tournée vers la surface supérieure (41) est conçue de telle sorte qu'un élément de fixation vissé est bloqué par serrage.

11. Élément de fixation de construction légère selon les revendications 1 à 10, **caractérisé en ce que** la base d'écrou (42) présente, sur sa face supérieure opposée à la surface de base (43), des zones d'appui (47, 48) qui ont une courbure concave et sont orientées de manière à permettre un mouvement de roulement ou de basculement de l'écrou de clip (40) le long de la première branche (22).

12. Élément de fixation de construction légère selon les revendications 1 à 11, **caractérisé en ce que** la base d'écrou (42) présente un chanfrein (45) incliné par rapport à la surface de base.

13. Élément de fixation de construction légère selon la revendication 12, **caractérisé en ce que** la base d'écrou (42) présente, sur le bord opposé au chanfrein (45), une arête de butée (49) qui, lorsque l'écrou de clip (40) est logé dans la cage (48), est disposée parallèlement et à distance en face d'une surface d'appui de secours (19).

14. Élément de fixation de construction légère selon les revendications 1 à 13, **caractérisé en ce que** le corps de clip est réalisé d'une seule pièce en matière plastique, de préférence en une matière thermoplastique, en particulier en PEEK.

15. Élément de fixation de construction légère selon les revendications 1 à 14, **caractérisé en ce que** le corps de clip est réalisé d'une seule pièce sous forme de moulage par injection à deux composants, le premier composant en matière plastique étant choisi plus élastique que le deuxième.

16. Élément de fixation de construction légère selon la revendication 15, **caractérisé en ce que** le composant plus élastique est utilisé principalement dans la zone de la deuxième branche (22), respectivement de la languette (27), et dans la zone de l'entretoise (23).
